# NEUE EUROPÄISCHE PATENTSCHRIFT

(11) **EP 1 891 369 B2**
(45) Veröffentlichungstag und Bekanntmachung des Hinweises auf die Entscheidung über den Einspruch: **07.03.2018**
(45) Hinweis auf die Patenterteilung: 18.04.2012
(21) Anmeldenummer: 06742833.4
(22) Anmeldetag: 08.05.2006
(51) Int. Cl.: F21V 9/02, F21S 2/00, F21S 8/00, H05B 37/02, F21V 14/00

(54) **BELEUCHTUNGSANORDNUNG ZUR UNTERSTÜTZUNG DER MENSCHLICHEN SEHFUNKTION SOWIE DES WOHLBEFINDENS**
ILLUMINATION ASSEMBLY FOR ASSISTING HUMAN VISION AND WELL-BEING
DISPOSITIF D'ECLAIRAGE POUR AMELIORER LA FONCTION VISUELLE D'UNE PERSONNE, ET SON CONFORT

(30) Priorität: 13.06.2005 DE 102005027262
(43) Veröffentlichungstag der Anmeldung: 27.02.2008
(60) Teilanmeldung: 09162930.3
(73) Patentinhaber: Zumtobel Lighting GmbH, 6850 Dornbirn (AT)
(72) Erfinder: SEJKORA, Günther, A-6867 Schwarzenberg (AT)
(74) Vertreter: Thun, Clemens
(86) Internationale Anmeldenummer: PCT/EP2006/004289
(87) Internationale Veröffentlichungsnummer: WO 2006/133772

(56) Entgegenhaltungen:
- EP-A2- 1 043 542
- AT-U1- 5 652
- DE-A1- 19 547 747
- DE-U1- 20 104 346
- DE-U1- 20 116 022
- DE-U1- 29 906 238
- DE-U1- 2000 206 041
- GB-A- 798 884
- JP-A- 11 111 024
- JP-A- H04 292 801
- US-A- 4 876 633
- US-A- 4 956 751
- US-A1- 2002 048 177
- US-B1- 6 459 919
- JP H04292801 ABSTRACT
- JP 2529477 B2 + elektronische Übersetzung
- Katalogauszug aus Siteco Innenleuchten, 2000 Kapitel 3, 5, 32 + 33; Kapitel 4, Seite 37-71, Anhang Seite 11 +30-33.
- Prospekt : Sekundär-milieu-Pendelleuchte: Licht nach Bedarf, Siemens AG DIN 5035, Teil 1, Juni 1990

## Beschreibung

Die vorliegende Erfindung betrifft eine Anordnung zur Beleuchtung eines zum Aufenthalt von Menschen bestimmten Raumes gemäß dem Oberbegriff des Anspruchs 1, wobei die Anordnung dazu ausgebildet ist, eine erste, die menschliche Sehfunktion unterstützende Lichtkomponente und eine zweite, das biologische Wohlbefinden eines Menschen unterstützende Lichtkomponente abzugeben, und wobei die erste Lichtkomponente eine erste Farbtemperatur und die zweite Lichtkomponente eine gegenüber der ersten Lichtkomponente erhöhte zweite Farbtemperatur aufweist.

Herkömmliche Leuchten und Beleuchtungssysteme unterstützen durch Erzeugen einer entsprechenden Beleuchtungsstärke auf Flächen wie z. B. Arbeitstischen in erster Linie die Sehfunktion des Menschen. Durch Aufhellen einer Arbeitsfläche zum Beispiel wird das Lesen von Unterlagen bzw. das Betrachten von Dokumenten und dgl. deutlich vereinfacht. Hierfür sind unterschiedlichste Maßnahmen bekannt, um die Sehfunktion in besonders effektiver Weise zu unterstützen. Insbesondere ist es üblich, das Licht derart auf Arbeitsflächen zu richten, dass Blendeffekte vermieden werden.

Durch neueste Untersuchungen konnte ferner gezeigt werden, dass auch vegetative Funktionen des Menschen unmittelbar durch Licht beeinflusst werden. So hat sich gezeigt, dass z. B. die Ausschüttung des Hormons Melatonin sowie die Steuerung der Tagesrhythmik eines Menschen von dem zur Verfügung stehenden Licht beeinflusst wird. Während die menschliche Sehfunktion allerdings auf Licht im gelben Bereich des Spektrums, also bei einer Wellenlänge von etwa 550 nm am empfindlichsten ist, haben die zuvor beschriebenen Studien gezeigt, dass das Empfindlichkeitsmaximum für die vegetativen Funktionen eines Menschen im blauen Bereich des Spektrums, also bei ca. 450 nm liegt.

Zwar sind bereits Beleuchtungsanordnungen bekannt, bei denen verschiedenfarbiges Licht unterschiedlicher Lichtquellen zur Beleuchtung eingesetzt wird, hierbei sollen allerdings in erster Linie lichttechnische Effekte erzielt werden, welche für einen Beobachter ansprechend wirken. Abgesehen davon wurden bislang keine besonderen Vorkehrungen getroffen, um beide oben beschriebenen menschlichen Funktionen, also sowohl die Sehfunktion als auch die biologischen Funktionen gleichzeitig zu unterstützen.

Aus der US 4,956,751 ist eine Leuchte bekannt, mit der zwei Lichtkomponenten abgestrahlt werden, und zwar eine erste Komponente von einer Glühlampe und eine zweite Komponente von Leuchtstofflampen. Die beiden Komponenten werden zur Erzeugung eines möglichst natürlich wirkenden Lichts gemischt.

Die JP 11111024 offenbart Anordnung zur Beleuchtung eines zum Aufenthalt von Menschen bestimmten Raumes, mit Lichtquellen zur Abgabe einer ersten und einer zweiten Lichtkomponente, wobei die erste Lichtkomponente eine erste Farbtemperatur, um die menschliche Sehfunktion zu unterstützen, und die zweite Lichtkomponente eine zweite Farbtemperatur aufweist, um das biologische Wohlbefinden eines Menschen zu unterstützen, wobei
die Abstrahlfläche für die zweite Lichtkomponente diffus abstrahlend ausgebildet und oberhalb der Blickrichtung angeordnet ist oder
die Anordnung ist derart ausgestaltet, dass die zweite Lichtkomponente derart abgestrahlt wird, dass sie lediglich einen vertikalen Wandbereich beleuchtet, welcher sich zumindest oberhalb der Augenhöhe eines sitzenden, insbesondere oberhalb der Augenhöhe eines stehenden Menschen, befindet.

Der vorliegenden Erfindung liegt dementsprechend die Aufgabe zugrunde, eine neuartige Anordnung zur Beleuchtung eines zum Aufenthalt von Menschen bestimmten Raumes anzugeben, wobei einerseits die Sehfunktion eines Menschen optimal mit weißem Licht unterstützt werden soll und andererseits Licht zur Verfügung gestellt wird, um die vegetativen Funktionen eines Menschen zu unterstützen. Hierbei soll insbesondere eine möglichst hohe Energieeffizienz erreicht werden.

Die Aufgabe wird durch eine Anordnung zur Beleuchtung gemäß einem der unabhängigen Ansprüche gelöst. Vorteilhafte Weiterbildungen der Erfindung sind Gegenstand der Unteransprüche.

Gemäß einem ersten Aspekt der Erfindung wird also ein Anordnung zur Beleuchtung eines zum Aufenthalt von Menschen bestimmten Raumes vorgeschlagen, mit Lichtquellen zur Abgabe einer ersten und einer zweiten Lichtkomponente, wobei die erste Lichtkomponente eine erste Farbtemperatur von weniger als 5000 K aufweist, um die menschliche Sehfunktion zu unterstützen, und die zweite Lichtkomponente eine gegenüber der ersten Lichtkomponente höhere zweite Farbtemperatur von mehr als 5000 K aufweist, um das biologische Wohlbefinden eines Menschen zu unterstützen, und wobei die Abstrahlfläche für die zweite Lichtkomponente mindestens doppelt so groß ist wie die Abstrahlfläche für die erste Lichtkomponente. Die Erfindung ist dadurch gekennzeichnet, dass Steuermittel zur zeitabhängigen Helligkeitssteuerung der zweiten Lichtkomponente vorgesehen sind, wobei ferner die Helligkeit der ersten Lichtkomponente lediglich durch einen manuellen Eingriff eines Benutzers anpassbar ist oder in Abhängigkeit von in den zu beleuchtenden Raum einfallenden Tageslicht sowie der zweiten Lichtkomponente gesteuert wird.

Gemäß einem zweiten Aspekt der Erfindung wird ferner eine Anordnung zur Beleuchtung eines zum Aufenthalt von Menschen bestimmten Raumes vorgeschlagen, mit Lichtquellen zur Abgabe einer ersten und einer zweiten Lichtkomponente, wobei die erste Lichtkomponente eine erste Farbtemperatur von weniger als 5000 K aufweist, um die menschliche Sehfunktion zu unterstützen, und die zweite Lichtkomponente eine gegenüber der ersten Lichtkomponente höhere zweite Farbtemperatur von mehr als 5000 K aufweist, um das biologische Wohlbefinden eines Menschen zu unterstützen,
wobei
a) die Abstrahlfläche für die zweite Lichtkomponente diffus abstrahlend ausgebildet und oberhalb der Blickrichtung angeordnet ist oder
b) die Anordnung derart ausgestaltet ist, dass die zweite Lichtkomponente derart abgestrahlt wird, dass sie einen vertikalen Wandbereich beleuchtet, welcher sich zumindest oberhalb der Augenhöhe eines sitzenden, insbesondere oberhalb der Augenhöhe eines stehenden Menschen befindet,
und wobei die Anordnung derart ausgestaltet ist, dass die erste Lichtkomponente gerichtet abgestrahlt wird. Die Erfindung zeichnet sich ferner dadurch aus, dass Steuermittel zur zeitabhängigen Helligkeitssteuerung der zweiten Lichtkomponente vorgesehen sind, wobei ferner die Helligkeit der ersten Lichtkomponente lediglich durch einen manuellen Eingriff eines Benutzers anpassbar ist oder in Abhängigkeit von in den zu beleuchtenden Raum einfallenden Tageslicht sowie der zweiten Lichtkomponente gesteuert wird.

Durch die vorliegende Erfindung werden also Lösungen zur Raumbeleuchtung vorgeschlagen, mit denen verschiedene Funktionen eines Menschen gleichzeitig und in optimaler Weise unterstützt werden.

Nachfolgend soll die Erfindung anhand der beiliegenden Zeichnung näher erläutert werden. Es zeigen:
- Fig. 1: ein erstes Ausführungsbeispiel einer erfindungsgemäßen Beleuchtungsanordnung in Form einer Dekkeneinbauleuchte;
- Fig. 2: ein zweites Ausführungsbeispiel der vorliegenden Erfindung in Form einer Anbauleuchte;
- Fig. 3: ein drittes Ausführungsbeispiel in Form einer modularen Lichtdecke;
- Fig. 4: ein viertes Ausführungsbeispiel in Form einer Lichtdecke;
- Fig. 5: ein fünftes Ausführungsbeispiel in Form einer Wannenleuchte;
- Fig. 6: ein sechstes Ausführungsbeispiel in Form einer Rasterleuchte;
- Fig. 7 und 8: zwei weitere Ausführungsbeispiele, die insbesondere zur Nutzung in kleineren Räumen geeignet sind;
- Fig. 9 und 10: Möglichkeiten zur zeitabhängigen Helligkeitssteuerung der zweiten Lichtkomponente und
- Fig. 11: ein Schema zur zeitabhängigen Helligkeitssteuerung beider Lichtkomponenten.

Gegenstand der vorliegenden Erfindung ist also wie bereits erwähnt eine Leuchte oder eine Kombination von Leuchten, bei denen Licht mit einer ersten Farbtemperatur von weniger als 5.000 K (die erste Lichtkomponente) mit entsprechenden Mitteln vorzugsweise gerichtet auf die Sehaufgabe abgestrahlt wird und Licht mit einer zweiten Farbtemperatur von mehr als 5.000 K (die zweite Lichtkomponente) vorzugsweise diffus in den zu beleuchtenden Raum verteilt wird. Von besonderer Bedeutung ist also, dass die zweite Lichtkomponente eine gegenüber der ersten Lichtkomponente erhöhte Farbtemperatur aufweist. Die diffus abstrahlenden Flächen der Beleuchtungsanordnung sind dabei vorzugsweise oberhalb der Blickrichtung angeordnet, um die vegetativen Funktionen eines Menschen in optimaler Weise zu unterstützen.

Die Lichtquellen, welche das Licht der höheren und der niedrigeren Farbtemperatur erzeugen, sind vorzugsweise unabhängig voneinander regelbar, so dass der Anteil mit der höheren Farbtemperatur über den Tag entsprechend einer Wachkurve verändert werden kann. Dies bedeutet, dass am Morgen und am Abend weniger Licht höherer Farbtemperatur abgegeben wird, während hingegen zur Mittagszeit viel Licht mit dieser Farbtemperatur zur Verfügung gestellt wird. Der Anteil der Lichtkomponente mit der niedrigen Farbtemperatur hingegen kann entsprechend den Sehaufgaben und dem natürlichen Tageslichtangebot eingestellt werden. Wichtig hierbei ist, dass beide Lichtquellen kein farbiges Licht sondern stattdessen weißes Licht unterschiedlicher Farbtemperatur erzeugen. Hierdurch ist sichergestellt, dass unabhängig von der Lichtmenge aus beiden Quellen immer eine erforderliche Farbwiedergabe erreicht wird.

Zur Realisierung des soeben beschriebenen generellen Konzepts der vorliegenden Erfindung bestehen mehrere Möglichkeiten, die nachfolgend anhand der verschiedenen Figuren erläutert werden sollen.

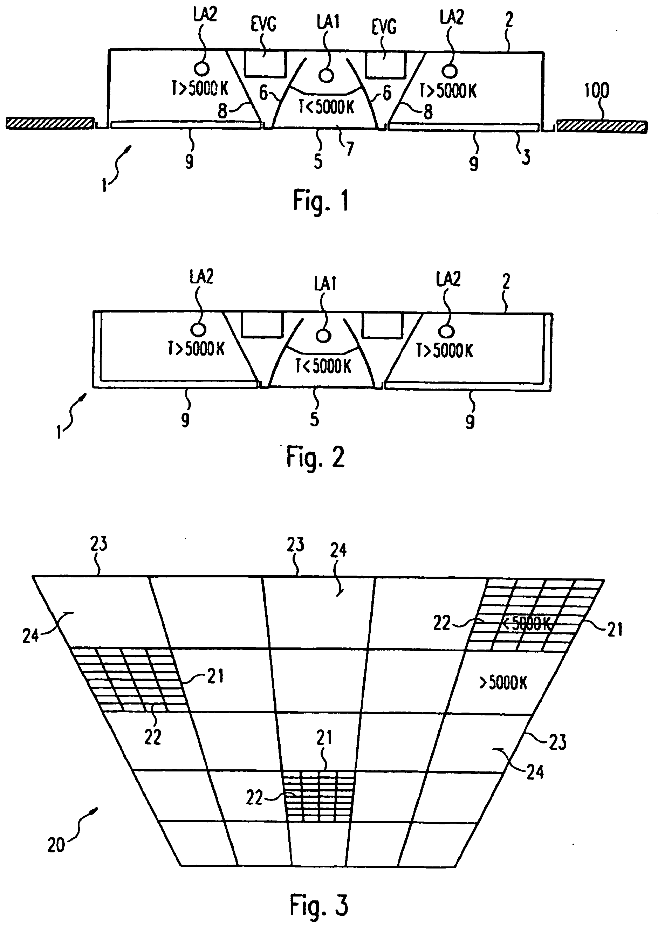

Ein erstes Ausführungsbeispiel der Erfindung in Form einer allgemein mit dem Bezugszeichen 1 versehenen Leuchte ist in Fig. 1 dargestellt. Das innerhalb einer Öffnung einer (bspw.) abgehängten Decke 100 anzuordnende Leuchtengehäuse 2 ist mittels Zwischenwänden 8 in unterschiedliche Bereiche unterteilt, in denen jeweils verschiedene Lichtquellen angeordnet sind. Ein erster mittlerer Bereich dient dabei zur Anordnung einer ersten Lichtquelle LA1, welche zur Unterstützung der Sehaufgabe vorgesehen ist und hierzu Weißlicht mit einer Farbtemperatur unterhalb von 5.000 K abgibt. Wie bereits erwähnt wurde, ist diese erste Lichtkomponente in besonders guter Weise dazu geeignet, die menschliche Sehfunktion zu unterstützen.

Da bei der Unterstützung der menschlichen Sehfunktion gezielt bestimmte Bereiche ausgeleuchtet werden sollten, ist vorzugsweise vorgesehen, dass das Licht dieser ersten Lichtquelle LA1 über ein Leuchtenraster 5 gerichtet abgestrahlt wird. Das Leuchtenraster weist hierzu zwei, die Lichtquelle LA1 seitlich umfassende Seitenreflektoren 6 auf, welche über sich quer zu den Seitenreflektoren 6 erstreckende Querlamellen 7 miteinander verbunden sind. Derartige Leuchtenraster sind bereits hinlänglich bekannt und dienen dazu, das Licht einer Lichtquelle lediglich in einem bestimmten Winkelbereich abzugeben, um bspw. Blendeffekte zu vermeiden. Das Licht der ersten Lichtquelle LA1 wird also gezielt auf einen bestimmten Bereich des zu beleuchtenden Raumes gerichtet.

Neben dieser ersten Lichtquelle LA1 sind in dem Gehäuse 2 zwei weitere Lichtquellen LA2 angeordnet, welche sich in seitlichen Bereichen des Gehäuses 2 befinden, die durch die Seitenwände 8 von dem mittleren Bereich mit der ersten Lichtquelle LA 1 getrennt sind. Diese Lichtquellen LA2 dienen zur Erzeugung der zweiten Lichtkomponente und geben dementsprechend Weißlicht mit einer höheren Farbtemperatur ab, die oberhalb von 5.000 K liegt. Wie bereits zuvor erläutert wurde, ist es erstrebenswert, dieses Licht möglichst diffus abzustrahlen, da dieses Licht dann in besonders guter Weise von einem menschlichen Auge erfasst werden kann. Die Gehäusebereiche, in denen diese zwei Lichtquellen LA2 angeordnet sind, sind dementsprechend an der Unterseite mit opalen Lichtabstrahlplatten 9 versehen, durch welche das von den Lichtquellen LA2 abgegebene Licht diffus abgestrahlt wird.

Die Seitenwände 8 können vorzugsweise ebenso wie die Innenseite des Gehäuses 2 reflektierend ausgestaltet sein, um das von den verschiedenen Lichtquellen LA1, LA2 abgegebene Licht möglichst optimal zu nutzen. Innerhalb des Gehäuses 2 können ferner Lampenbetriebsgeräte in Form von elektronischen Vorschaltgeräten (EVG) vorgesehen sein, mit deren Hilfe die Lichtquellen betrieben werden. Hierdurch besteht die Möglichkeit, die Helligkeit der verschiedenen Lichtkomponenten entsprechend den speziellen Wünschen eines Nutzers bzw. automatisch anzupassen.

Insgesamt wird also eine Leuchte geschaffen, über die zum einen Licht einer niedrigeren Farbtemperatur gerichtet und zum anderen Licht einer höheren Farbtemperatur diffus abgestrahlt wird. Vorzugsweise sind die Größenverhältnisse für die opalen Abstrahlplatten 9 und das Raster 5 derart gewählt, dass die Fläche zur Lichtabstrahlung der zweiten Lichtkomponente mindestens doppelt so groß ist wie die Lichtaustrittsfläche des Rasters 5. Es hat sich gezeigt, dass durch diese Wahl der Größenverhältnisse für die Abstrahlflächen der beiden verschiedenen Lichtkomponenten die angestrebten Ziele zur Unterstützung der Sehfunktion sowie des Wohlbefindens eines Menschen in besonders effektiver Weise nebeneinander erreicht werden können.

Eine Variante der in Fig. 1 dargestellten erfindungsgemäßen Leuchte ist in Fig. 2 dargestellt. Hierbei handelt es sich um eine Deckenanbauleuchte, deren Gehäuse 2 wiederum zunächst derart unterteilt ist, dass einerseits über ein Leuchtenraster 5 Licht einer ersten Lichtquelle LA1 mit einer niedrigeren Farbtemperatur von unterhalb von 5.000 K gerichtet abgestrahlt wird, während hingegen das Licht von zweiten Lichtquellen LA2 mit einer Farbtemperatur von oberhalb von 5.000 K diffus abgestrahlt wird. Im Gegensatz zu der Leuchte in Fig. 1, bei welcher zum Abstrahlen der zweiten Lichtkomponente opale Platten genutzt werden, werden bei der Leuchte von Fig. 2 opale bzw. diffus abstrahlende quaderförmige Seitenteile 9 eingesetzt, welche sich bis zur Bodenseite des Gehäuses 2 erstrecken. Der Vorteil dieser Ausgestaltung besteht darin, dass auch unter flachen Winkeln die Abbildung der zweiten Lichtkomponente auf der unteren Netzhauthälfte immer gleich groß ist. Hierdurch wird also nochmals eine besondere Maßnahme getroffen, die sicherstellt, dass das Licht der zweiten Lichtkomponente optimal dazu genutzt wird, das menschliche Wohlbefinden zu unterstützen. Die opalen Seitenteile bzw. Lichtabstrahlkörper 9 könnten anstatt der abgewinkelt dargestellten Ausführungsform auch halb- oder viertelzylindrisch bzw. oval ausgeführt sein. Der Vorteil der Ausgestaltung als Viertelzylinder besteht darin, dass dann von allen Richtungen aus immer eine gleich große Fläche für einen Betrachter sichtbar ist.

In den Fig. 1 und 2 waren Ausführungsbeispiele der erfindungsgemäßen Beleuchtungsanordnung dargestellt, welche durch eine einzelne Leuchte gebildet wurden. Fig. 3 zeigt nunmehr eine Variante der vorliegenden Erfindung, bei der die Beleuchtungsanordnung aus mehreren Einzelleuchten gebildet ist. Hierbei wird eine modulare Lichtdecke 20 gebildet, welche einerseits aus quadratischen Rasterleuchten 21 und andererseits aus quadratischen, opalen Wannenleuchten 23 besteht. Die Rasterleuchten 21 sind dabei wiederum derart ausgestaltet, dass sie Licht mittels einer Rasteranordnung 22 gerichtet zur Unterseite hin abstrahlen. Dementsprechend sind diese ersten Leuchten 21 dazu vorgesehen, das Licht der ersten Komponente mit der niedrigeren Farbtemperatur abzustrahlen. Die opalen Wannenleuchten 23 hingegen weisen diffus abstrahlende Lichtabstrahlflächen 24 auf, über welche Licht der zweiten Komponente mit einer gegenüber der ersten Farbtemperatur erhöhten zweiten Farbtemperatur von abgestrahlt wird.

Wiederum wird hierdurch einerseits gerichtetes Licht zur Unterstützung der Sehfunktion sowie andererseits diffuses Licht zur Unterstützung des menschlichen Wohlbefindens zur Verfügung gestellt. Durch die Größe der Lichtdecke 20 ist dabei sichergestellt, dass unabhängig vom Standort eines Menschen immer gleich viel Licht der zweiten Lichtkomponente durch die untere Netzhauthälfte des Menschen empfangen wird. Vorzugsweise ist das Größenverhältnis zwischen den verschiedenen Leuchten 21, 23 derart bemessen, dass die Lichtabstrahlfläche der Rasterleuchten 29 im Vergleich zur Lichtabstrahlfläche der Wannenleuchten 23 1:4 bis 1:25 beträgt.

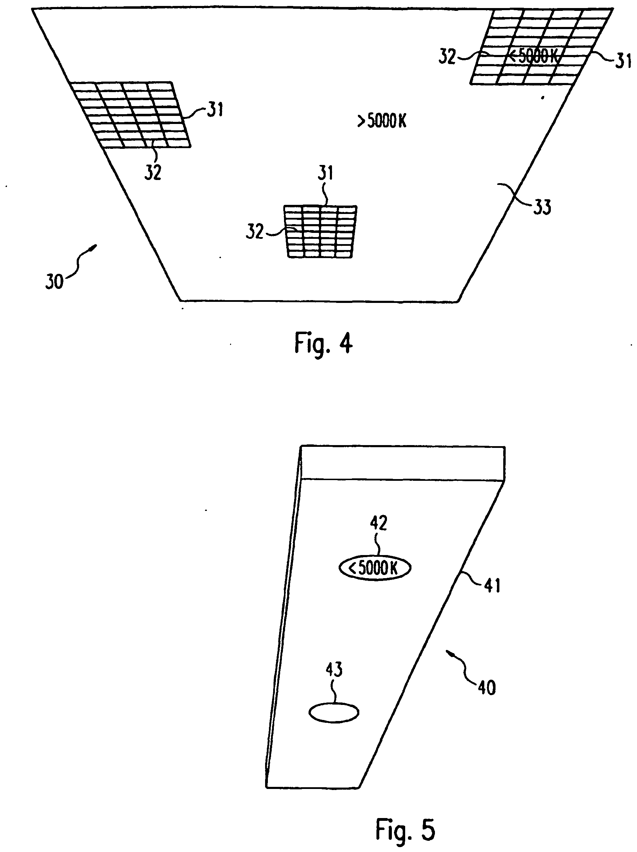

Alternativ zu der Ausgestaltung gemäß Fig. 3 kann auch vorgesehen sein, dass anstelle einzelner opaler Wannenleuchten eine gesamte Lichtdecke zur diffusen Lichtabstrahlung der zweiten Lichtkomponente genutzt wird. Bei dem in Fig. 4 dargestellten Ausführungsbeispiel, bei dem die Beleuchtungsanordnung allgemein mit dem Bezugszeichen 30 versehen ist, sind dann innerhalb dieser Lichtdecke 33 zur Abstrahlung der zweiten Lichtkomponente einzelne Rasterleuchten 31 mit Rasteranordnungen 32 angeordnet, über welche wiederum das Licht der ersten Lichtkomponente zur Unterstützung der Sehfunktion gerichtet abgegeben wird. In gleicher Weise wie bei dem Ausführungsbeispiel gemäß Fig. 3 werden also wiederum die verschiedenen Lichtkomponenten zur Unterstützung der unterschiedlichen Funktionen zur Verfügung gestellt, wobei die Größenverhältnisse für die Lichtabstrahlflächen der beiden Lichtkomponenten wiederum vorzugsweise im Bereich zwischen 1:4 und 1:25 liegen.

Eine weitere Möglichkeit zur Realisierung einer erfindungsgemäßen Beleuchtungsanordnung ist in Fig. 5 dargestellt. Hierbei wird die Beleuchtungsanordnung 40 durch eine größere opale Wannenleuchte 41 gebildet, die zum Einbau oder Deckenanbau vorgesehen sein kann und eine größere Breite aufweist. Über diese opale Wannenleuchte wird zunächst das Licht der zweiten Lichtkomponente mit der Farbtemperatur oberhalb von 5.000 K diffus abgestrahlt. Innerhalb der Wannenleuchte sind allerdings einzelne Strahler bzw. sogenannte Downlights 42 angeordnet, über die gezielt Licht der ersten Lichtkomponente zur Unterseite hin abgestrahlt wird. Mittels dieser Downlights 42 kann also bewusst ein ganz bestimmter Bereich, der zur Arbeit genutzt wird, mittels der ersten Lichtkomponente ausgeleuchtet werden.

Bei den bislang beschriebenen Ausführungsbeispielen wurden beide Lichtkomponenten grundsätzlich in direkter Weise abgestrahlt. Dies ist für die erste Lichtkomponente, welche zur Unterstützung der Sehfunktion vorgesehen ist, ohnehin vorteilhaft, da nur bei einer direkten Lichtabstrahlung das Licht in optimaler Weise zur Unterstützung der Sehfunktion zur Verfügung gestellt werden kann. Die zweite Lichtkomponente hingegen zur Unterstützung des menschlichen Wohlbefindens muss nicht zwangsläufig direkt abgestrahlt werden.

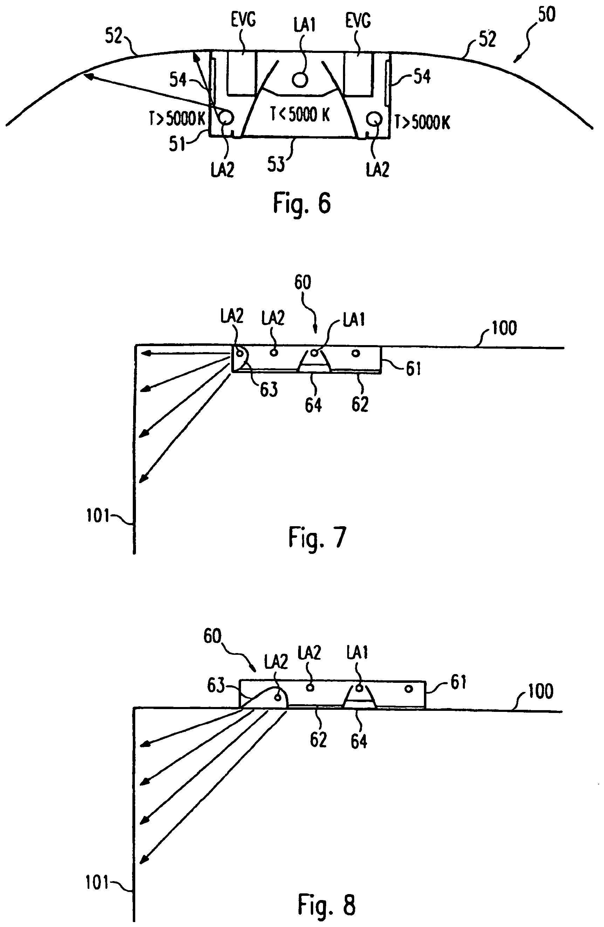

Bei dem Ausführungsbeispiel gemäß Fig. 6 ist dementsprechend eine Leuchte 50 vorgesehen, in deren Leuchtengehäuse 51 zunächst wiederum die beiden verschiedenen Lichtquellen LA1 und LA2 angeordnet sind. Das Licht der ersten Lichtquelle LA1 wird wiederum über ein Raster 53 gerichtet zur Unterseite hin abgestrahlt. Das Licht der zweiten Lichtquellen LA2 mit der Farbtemperatur oberhalb von 5.000 K hingegen wird nunmehr dazu genutzt, einen das Leuchtengehäuse 51 übergreifenden und konkav gekrümmten Sekundärreflektor 52 anzustrahlen. Hierfür sind innerhalb des Leuchtengehäuses 51 seitliche Öffnungen bzw. transparente Fenster 54 vorgesehen, über welche eine seitliche Lichtabgabe der zweiten Lichtkomponente ermöglicht ist. Wie schematisch anhand der beiden Lichtstrahlen dargestellt ist, wird nunmehr das Licht dieser zweiten Lichtkomponente auf den vorzugsweise diffus reflektierenden Sekundärreflektor 52 abgegeben, wodurch somit der den Leuchtenkörper 51 umgebende Bereich mittels der zweiten Lichtkomponente indirekt aufgehellt wird. Auf diese Weise wird wiederum das Licht der beiden verschiedenen Lichtkomponenten in geeigneter Weise zur Unterstützung der Sehfunktion und des Wohlbefindens zur Verfügung gestellt.

Der Gedanke, die zweite Lichtkomponente im Rahmen einer Indirektbeleuchtung zur Verfügung zu stellen, ist auch bei den Ausführungsbeispielen der Fig. 7 und 8 vorgesehen. Diese Ausführungsbeispiele eignen sich speziell für kleinere Räume, bei denen der Großteil der oberhalb der Augachse liegenden Raumbegrenzungsflächen durch Wände und nicht durch die Decke gebildet wird.

Bei den Ausführungsbeispielen in den Fig. 7 und 8 ist dementsprechend vorgesehen, dass innerhalb des Leuchtengehäuses 61 zunächst mehrere Lichtquellen LA2 zur Erzeugung des Lichts mit der höheren Farbtemperatur angeordnet sind. Das Leuchtengehäuse ist an seiner Unterseite wiederum mit einer opalen Lichtabstrahlplatte 62 abgedeckt, über welche das Licht dieser zweiten Lichtquellen LA2 abgegeben wird. Zusätzlich ist nunmehr allerdings im seitlichen Bereich des Leuchtengehäuses ein sog. Wandfluter 63 vorgesehen, der ebenfalls Licht mit einer Farbtemperatur von größer als 5.000 K abgibt und dazu ausgestaltet ist, die Wand 101 des Raums, innerhalb der sich die Leuchte 60 befindet, zu beleuchten. Dieser Wandfluter 63 ist dabei vorzugsweise derart ausgestaltet, dass lediglich der Wandbereich beleuchtet wird, der sich oberhalb der Augachse befindet, also oberhalb von etwa 1,6 m für einen stehenden Menschen bzw. oberhalb von etwa 1,2 m für einen sitzenden Menschen. Hierdurch wird zusätzlich zu dem über die opale Lichtabstrahlplatte 62 abgestrahlten Licht weiteres Licht der zweiten Lichtkomponente in indirekter Weise zur Verfügung gestellt, wobei die Bestrahlung der Wand 101 gezielt derart erfolgt, dass das indirekt zur Verfügung gestellte Licht derart ausgestaltet ist, dass es das menschliche Wohlbefinden in optimierter Weise unterstützt.

Selbstverständlich weist die in den Fig. 7 und 8 dargestellte Leuchte 60 auch eine erste Lichtquelle LA 1 zur Erzeugung der ersten Lichtkomponente auf, deren Licht wiederum vorzugsweise über ein Raster 64 zur Unterseite hin abgestrahlt wird.

Anzumerken ist, dass die ergänzende Nutzung der Wandfluter bei sämtlichen zuvor beschriebenen Ausführungsbeispielen denkbar wäre. Wie bereits erwähnt wurde, besteht hierdurch die Möglichkeit, auch in kleineren Räumen ausreichend Licht der zweiten Lichtkomponente zur Verfügung zu stellen, ohne hierzu allzu große Leuchtenkörper einsetzen zu müssen.

Sämtliche beschriebenen Ausführungsbeispiele der vorliegenden Erfindung beruhen also auf der Idee, zwei unterschiedliche Lichtkomponenten zur Verfügung zu stellen, welche jeweils bestimmte Anforderungen bzw. Funktionen erfüllen. Die Abstrahlung der verschiedenen Lichtkomponenten ist dabei derart gewählt, dass die jeweilige Lichtkomponente in optimaler Weise von einer sich in dem zu beleuchten Raum bzw. Bereich aufhaltenden Person erfasst und zur Unterstützung der entsprechenden Funktion genutzt werden kann. Die Lichtquellen sind dabei vorzugsweise derart ausgestaltet, dass ihre Intensität verändert bzw. variiert werden kann. Der Grund hierfür ist, dass auch die Anforderungen an die verschiedenen Lichtkomponenten sich im Laufe des Tages ändern.

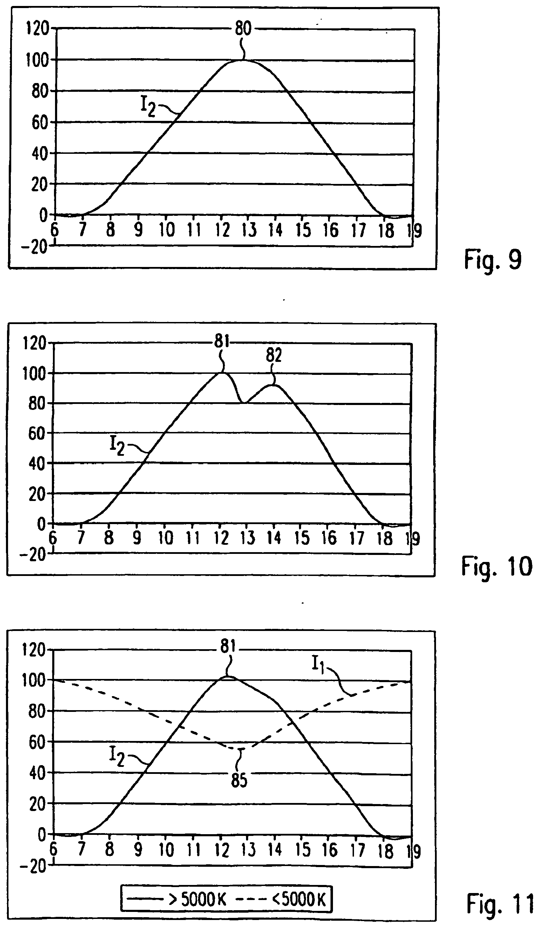

Es ist dementsprechend vorgesehen, dass den Beleuchtungsanordnungen Steuermittel zugeordnet sind, die beispielsweise in die Lampenbetriebsgeräte EVG integriert sind und mit deren Hilfe die Helligkeit bzw. Intensität der verschiedenen Lichtkomponenten zeitabhängig gesteuert werden kann. Hierfür bestehen unterschiedliche Möglichkeiten zur zeitabhängigen Steuerung, die nachfolgend anhand der Fig. 9 bis 11 näher beschrieben werden sollen.

In einer ersten Ausführungsform, welche in Fig. 9 dargestellt ist, bleibt die erste Lichtkomponente zur Unterstützung der Sehfunktion von der automatischen Steuerung unberücksichtigt. Die Helligkeit dieser ersten Lichtkomponente kann also bei dieser ersten Variante lediglich durch einen manuellen Eingriff des Benutzers der Sehaufgabe angepasst werden, was durchaus sinnvoll ist, sofern diese Lichtkomponente nur in bestimmten Zeiträumen benötigt wird. Die zweite Lichtkomponente mit einer Farbtemperatur oberhalb von 5.000 K wird hingegen automatisch gesteuert, wobei die Intensität dieser Komponente entsprechend der natürlichen Rhythmik des Menschen nach einer einfachen Zeitfunktion nachgeführt wird. Die in Fig. 9 dargestellte Intensitätskurve I₂ für diese zweite Lichtkomponente nimmt also um die Mittagszeit ein Maximum 80 an, während hingegen morgens und abends weniger Licht in der entsprechenden Farbtemperatur zur Verfügung gestellt wird.

Eine Variante der zeitabhängigen Steuerung gemäß dem Ausführungsbeispiel von Fig. 9 besteht darin, am frühen Nachmittag nach einem leichten Rückgang der Intensität der zweiten Komponente nochmals die Intensität leicht anzuheben, um das üblicherweise auftretende "Nachmittagsloch" im natürlichen Aktivierungsablauf eines Menschen durch eine verstärkte Unterstützung der vegetativen Funktion zu überbrücken. Die hierbei gebildete und in Fig. 10 dargestellte Intensitätskurve I₂ weist also zwei Maxima 81 und 82 auf, welche in etwa bei 12.00 Uhr bzw. 14.30 Uhr liegen.

Während bei der ersten Ausführungsform über die zeitabhängige Steuerung lediglich die Intensität der zweiten Lichtkomponente automatisch eingestellt wurde, ist in einer zweiten Ausführungsform die nicht Bestandteil der Ansprüche ist, vorgesehen, beide Lichtkomponenten gegengleich zu steuern. Hierbei wird wiederum die zweite Lichtkomponente so gesteuert, dass sie dem natürlichen Rhythmus des Menschen entspricht. Es wird also wenig Licht am Morgen und am Abend zur Verfügung gestellt, während hingegen die Intensitätskurve I₂ gemäß der Darstellung in Fig. 11 wiederum zur Mittagszeit ein Maximum 80 (oder ggf. entsprechend der Variante von Fig. 10 zwei Maxima) annimmt. Die erste Lichtkomponente mit einer Farbtemperatur unterhalb von 5.000 K wird demgegenüber gegengleich gesteuert, ihre Intensitätskurve I₁ nimmt also um die Mittagszeit herum ein Minimum 85 an. Diese gegengleiche Ansteuerung ist sinnvoll, da die zweite Lichtkomponente zu einem gewissen Teil ebenfalls Licht in dem für die Sehaufgabe optimierten Spektralbereich abstrahlt. Ein durch die Verstärkung der zweiten Lichtkomponente auftretendes Überangebot an Beleuchtungsstärke wird deshalb durch eine Rücknahme der ersten Lichtkomponente zur Mittagszeit hin kompensiert.

Eine dritte Ausführungsform besteht darin, wiederum zunächst die zweite Lichtkomponente so zu steuern, dass sie dem natürlichen Rhythmus des Menschen entspricht. Die erste Lichtkomponente hingegen wird nunmehr in Abhängigkeit von dem durch die Fenster des zu beleuchtenden Raumes einfallenden Tageslicht sowie in Abhängigkeit von dem für die Sehfunktion nutzbaren Anteils der zweiten Lichtkomponente gesteuert. Auf diese Weise wird erreicht, dass immer das erforderliche Beleuchtungsniveau erreicht wird und gleichzeitig möglichst wenig Energie für die Beleuchtung verbraucht wird. Die Steuerkurve für die erste Lichtkomponente ähnelt dabei der Darstellung in Fig. 11, allerdings wird der Rückgang der ersten Lichtkomponente während des Tages je nach Tageslichtangebot deutlich stärker ausfallen.

In einer vierten Ausführungsform schließlich wird die zweite Lichtkomponente nicht nur tageszeitabhängig, sondern auch jahreszeitabhängig gesteuert. Während der Herbst- und Wintermonate wird also deutlich mehr Licht der zweiten Komponente zur Verfügung gestellt werden als während der Frühjahrs- und Sommermonate, um hierdurch das fehlende Angebot an natürlichem Licht im Freien auszugleichen. Die erste Lichtkomponente kann wiederum entsprechend den zuvor beschriebenen Ausführungsbeispielen konstant bleiben, zur Mittagszeit hin zurückgenommen werden oder in Abhängigkeit von Tageslichtangebot und Verlauf der zweiten Lichtkomponente automatisch gesteuert werden.

Insgesamt wird somit durch die vorliegende Erfindung eine Beleuchtungsanordnung zur Verfügung gestellt, welche die an sie gestellten Anforderungen zur Ausleuchtung eines Raumes optimal erfüllt und darüber hinaus derart ausgestaltet ist, dass die vegetativen Funktionen eines Menschen, der sich innerhalb des beleuchteten Bereichs aufhält, optimal unterstützt werden. Ein besonderer Vorteil der vorliegenden Erfindung besteht dabei darin, dass sowohl die Sehfunktion als auch die vegetativen Funktionen gleichzeitig in geeigneter Weise unterstützt werden.

## Patentansprüche

1. Anordnung (1, 20, 30, 40, 50, 60) zur Beleuchtung eines zum Aufenthalt von Menschen bestimmten Raumes, mit Lichtquellen (LA1, LA2) zur Abgabe einer ersten und einer zweiten Lichtkomponente, wobei die erste Lichtkomponente eine erste Farbtemperatur von weniger als 5000 K aufweist, um die menschliche Sehfunktion zu unterstützen, und die zweite Lichtkomponente eine gegenüber der ersten Lichtkomponente höhere zweite Farbtemperatur von mehr als 5000 K aufweist, um das biologische Wohlbefinden eines Menschen zu unterstützen,
und wobei die Abstrahlfläche für die zweite Lichtkomponente mindestens doppelt so groß ist wie die Abstrahlfläche für die erste Lichtkomponente.
**gekennzeichnet durch**
Steuermittel (EVG) zur zeitabhängigen Helligkeitssteuerung der zweiten Lichtkomponente,
wobei die Helligkeit der ersten Lichtkomponente lediglich durch einen manuellen Eingriff eines Benutzers anpassbar ist oder in Abhängigkeit von in den zu beleuchtenden Raum einfallenden Tageslicht sowie der zweiten Lichtkomponente gesteuert wird.

2. Anordnung nach Anspruch 1,
**dadurch gekennzeichnet,**
**dass**
a) die Abstrahlfläche für die zweite Lichtkomponente diffus abstrahlend ausgebildet und oberhalb der Blickrichtung angeordnet ist oder
b) die zweite Lichtkomponente derart abgestrahlt wird, dass sie einen vertikalen Wandbereich (101) beleuchtet, welcher sich zumindest oberhalb der Augenhöhe eines sitzenden, insbesondere oberhalb der Augenhöhe eines stehenden Menschen befindet.

3. Anordnung (1, 20, 30, 40, 50, 60) zur Beleuchtung eines zum Aufenthalt von Menschen bestimmten Raumes, mit Lichtquellen (LA1, LA2) zur Abgabe einer ersten und einer zweiten Lichtkomponente, wobei die erste Lichtkomponente eine erste Farbtemperatur von weniger als 5000 K aufweist, um die menschliche Sehfunktion zu unterstützen, und die zweite Lichtkomponente eine gegenüber der ersten Lichtkomponente höhere zweite Farbtemperatur von mehr als 5000 K aufweist, um das biologische Wohlbefinden eines Menschen zu unterstützen, wobei
c) die Abstrahlfläche für die zweite Lichtkomponente diffus abstrahlend ausgebildet und oberhalb der Blickrichtung angeordnet ist oder
d) die Anordnung derart ausgestaltet ist, dass die zweite Lichtkomponente derart abgestrahlt wird, dass sie einen vertikalen Wandbereich (101) beleuchtet, welcher sich zumindest oberhalb der Augenhöhe eines sitzenden, insbesondere oberhalb der Augenhöhe eines stehenden Menschen befindet,
und wobei die Anordnung derart ausgestaltet ist, dass die erste Lichtkomponente gerichtet abgestrahlt wird,
**gekennzeichnet durch**
Steuermittel (EVG) zur zeitabhängigen Helligkeitssteuerung der zweiten Lichtkomponente,
wobei die Helligkeit der ersten Lichtkomponente lediglich durch einen manuellen Eingriff eines Benutzers anpassbar ist oder in Abhängigkeit von in den zu beleuchtenden Raum einfallenden Tageslicht sowie der zweiten Lichtkomponente gesteuert wird.

4. Anordnung nach Anspruch 2 oder 3,
**dadurch gekennzeichnet,**
**dass** die Lichtabstrahlung der zweiten Lichtkomponente über eine opale Lichtabstrahlplatte bzw. einen opalen Lichtabstrahlkörper (9) erfolgt.

5. Anordnung nach Anspruch 4,
**dadurch gekennzeichnet,**
**dass** der opale Lichtabstrahlkörper (9) abgewinkelt, halb-, viertelzylindrisch oder oval ausgeführt ist.

6. Anordnung nach Anspruch 4 oder 5,
**dadurch gekennzeichnet,**
**dass** die Anordnung zumindest eine Wannenleuchte (23, 41) zur diffusen Lichtabstrahlung der zweiten Lichtkomponente aufweist.

7. Anordnung nach Anspruch 6,
**dadurch gekennzeichnet,**
**dass** die Anordnung mehrere Wannenleuchten (23) aufweist, welche zu einer modularen Lichtdecke (20) angeordnet sind.

8. Anordnung nach Anspruch 2 oder 3,
**dadurch gekennzeichnet,**
**dass** diese einen die Anordnung umgebenden Sekundärreflektor (52) aufweist, welcher von der bzw. den Lichtquellen (LA2) zur Abgabe der zweiten Lichtkomponente bestrahlt wird.

9. Anordnung nach Anspruch 8,
**dadurch gekennzeichnet,**
**dass** der Sekundärreflektor (52) diffus reflektierend ausgestaltet ist.

10. Anordnung nach einem der Ansprüche 2 bis 9,
**gekennzeichnet durch**
mindestens einen Wandfluter (63) mit einer Lichtquelle (LA2) zur Abgabe der zweiten Lichtkomponente, wobei der Wandfluter (63) zur Beleuchtung eines vertikalen Wandbereichs (101) ausgebildet ist.

11. Anordnung nach einem der Ansprüche 2 bis 10,
**gekennzeichnet durch**
mindestens einen Strahler (42) zur gerichteten Abstrahlung der ersten Lichtkomponente.

12. Anordnung nach einem der Ansprüche 2 bis 10,
**gekennzeichnet durch**
eine Rasteranordnung (5, 22, 32, 53) zur Abstrahlung des von den Lichtquellen (LA1) zur Erzeugung der ersten Lichtkomponente abgegebenen Lichts in einen bestimmten Winkelbereich.

13. Anordnung nach Anspruch 6 oder 7 und einem der Ansprüche 11 und 12
**dadurch gekennzeichnet,**
**dass** der Strahler (42) bzw. die Rasteranordnung (5, 22, 32, 53) in die Wannenleuchte (41) oder Lichtdecke (33) integriert ist.

14. Anordnung nach Anspruch 13,
**dadurch gekennzeichnet,**
**dass** das Verhältnis der Abstrahlfläche für die zweite Lichtkomponente zur Abstrahlfläche für die erste Lichtkomponente zwischen 4:1 und 25:1 liegt.

## Claims

1. An arrangement (1, 20, 30, 40, 50, 60) for the lighting of a room designated for the residence of human beings, having light sources (LA1, LA2) for the outputting of a first and a second light component, wherein the first light component has a first color temperature of less than 5000 K, in order to support the human visual function, and the second light component has a higher second color temperature compared to the first light component of more than 5000 K, in order to support the biological well-being of a human being, and wherein the radiating surface for the second light component is at least twice as large as the radiating surface for the first light component,
**characterized by**
controlling means (electronic ballast (EB)) for the time-dependent brightness control of the second light component,
wherein the brightness of the first light component can only be adjusted by a manual engagement of the user or is controlled in dependence on daylight entering into the room to be illuminated as well as on the second light component.

2. An arrangement according to Claim 1,
**characterized in**
**that**
a) the radiating surface for the second light component is designed to radiate diffusely and is arranged above the viewing direction or
b) the second light component is radiated in such a manner that it illuminates a vertical wall area (101), which is located at least above the eye level of a sitting human being, in particular, above the eye level of a standing human being.

3. An arrangement (1, 20, 30, 40, 50, 60) for the lighting of a room designated for the residence of human beings, having light sources (LA1, LA2) for the outputting of a first and a second light component, wherein the first light component has a first color temperature of less than 5000 K, in order to support the human visual function, and the second light component has a higher second color temperature compared to the first light component of more than 5000 K, in order to support the biological well-being of a human being,
wherein
c) the radiating surface for the second light component is designed to radiate diffusely and is arranged above the viewing direction or
d) the arrange is designed in such a manner that the second light component is radiated in such a manner that it illuminates a vertical wall area (101), which is located at least above the eye level of a sitting human being, in particular, above the eye level of a standing human being.
and wherein the arrangement is designed in such a manner that the first component is radiated directionally,
**characterized by**
controlling means (electronic ballast (EB)) for the time-dependent brightness control of the second light component,
wherein the brightness of the first light component can only be adjusted by a manual engagement of the user or is controlled in dependence on daylight entering into the room to be illuminated as well as on the second light component.

4. An arrangement according to Claim 2 or 3,
**characterized in**
**that** the light radiation of the second light component occurs via an opal light-radiating plate or an opal light-radiating body (9).

5. An arrangement according to Claim 4,
**characterized in**
**that** the opal light-radiating body (9) is designed angled, half-, quarter cylindrical or oval.

6. An arrangement according to Claim 4 or 5,
**characterized in**
**that** the arrangement has at least one trough lamp (23, 41) for the diffuse light radiation of the second light component.

7. An arrangement according to Claim 6,
**characterized in**
**that** the arrangement has several trough lamps (23), which are arranged to form a modular light ceiling (20).

8. An arrangement according to Claim 2 or 3,
**characterized in**
**that** said arrangement has a secondary reflector (52) encompassing the arrangement, which is irradiated by the light source or light sources (LA2) for the outputting of the second light component.

9. An arrangement according to Claim 8,
**characterized in**
**that** the secondary reflector (52) is designed to be diffusely reflective.

10. An arrangement according to any one of Claims 2 to 9,
**characterized by**
at least one wall floodlight (63) with a light source (LA2) for the outputting of the second light component, wherein the wall floodlight (63) is designed for the illumination of a vertical wall area (101).

11. An arrangement according to any one of the Claims 2 to 10,
**characterized by**
at least one emitter (42) for the directional radiation of the first light component.

12. An arrangement according to any one of Claims 2 to 10,
**characterized by**
a raster arrangement (5, 22, 32, 53) for the radiation of the light outputted by the light sources (LA1) for the generation of the first light component in a specific angular range.

13. An arrangement according to Claim 6 or 7 and any one of Claims 11 and 12
**characterized in**
**that** the emitter (42) or the raster arrangement (5, 22, 32, 53) is integrated into the trough lamp (41) or the light ceiling (33).

14. An arrangement according to Claim 13,
**characterized in**
**that** the ratio of the radiating surface for the second light component to the radiating surface for the first light component is between 4:1 and 25:1.

## Revendications

1. Dispositif (1, 20, 30, 40, 50, 60) pour l'éclairage d'un local conçu pour le séjour de personnes, avec des sources de lumière (LA1, LA2) pour l'émission d'une première et une deuxième composante de lumière, la première composante de lumière présentant une première température de couleur inférieure à 5000 K, afin de soutenir la fonction visuelle humaine et la deuxième composante de lumière présentant une deuxième température de couleur, supérieure à celle de la première composante de lumière, de plus de 5000 K, afin de favoriser le bien-être biologique d'un être humain, et la surface d'émission pour la deuxième composante de lumière étant au moins deux fois plus grande que la surface d'émission pour la première composante de lumière,
**caractérisé par**
des moyens de commande (EVG) pour le contrôle de la luminosité de la deuxième composante de lumière en fonction du temps,
la luminosité de la première composante de lumière pouvant être adaptée uniquement par une intervention manuelle d'un utilisateur ou étant contrôlée en fonction de la lumière du jour entrant dans le local à éclairer ainsi que la deuxième composante de lumière.

2. Dispositif selon la revendication 1,
**caractérisé en ce que**
a) la surface d'émission pour la deuxième composante de lumière est conçue de façon émettrice de manière diffuse et est disposée au-dessus de la direction de vision ou
b) la deuxième composante de lumière est émise de façon à éclairer une partie de paroi verticale (101), qui se trouve au moins au-dessus de la hauteur des yeux d'un être humain assis, plus particulièrement au-dessus de la hauteur des yeux d'un être humain debout.

3. Dispositif (1, 20, 30, 40, 50, 60) pour l'éclairage d'un local conçu pour le séjour de personnes, avec des sources de lumière (LA1, LA2) pour l'émission d'une première et une deuxième composante de lumière, la première composante de lumière présentant une première température de couleur inférieure à 5000 K, afin de soutenir la fonction visuelle humaine et la deuxième composante de lumière présentant une deuxième température de couleur, supérieure à celle de la première composante de lumière, de plus de 5000 K, afin de favoriser le bien-être biologique d'un être humain,
c) la surface d'émission pour la deuxième composante de lumière étant conçue de façon émettrice de manière diffuse et disposée au-dessus de la direction de vision ou
d) le dispositif étant conçu de façon à ce que la deuxième composante de lumière soit émise de façon à éclairer une partie de paroi verticale (101), qui se trouve au moins au-dessus de la hauteur des yeux d'un être humain assis, plus particulièrement au-dessus de la hauteur des yeux d'un être humain debout,
et le dispositif étant conçu de façon à ce que la première composante de lumière soit émise de manière dirigée,
**caractérisé par**
des moyens de commande (EVG) pour le contrôle de la luminosité de la deuxième composante de lumière en fonction du temps,
la luminosité de la première composante de lumière pouvant être adaptée uniquement par une intervention manuelle d'un utilisateur ou étant contrôlée en fonction de la lumière du jour entrant dans le local à éclairer ainsi que la deuxième composante de lumière.

4. Dispositif selon la revendication 2 ou 3,
**caractérisé en ce que**
l'émission de lumière de la deuxième composante de lumière a lieu par l'intermédiaire d'une plaque d'émission de lumière opale ou d'un corps d'émission de lumière opale (9).

5. Dispositif selon la revendication 4,
**caractérisé en ce que**
le corps d'émission de lumière opale (9) est conçue de manière pliée, avec la forme d'un demi-cylindre, d'un quart de cylindre ou sous une forme ovale.

6. Dispositif selon la revendication 4 ou 5,
**caractérisé en ce que**
le dispositif comprend au moins un luminaire à vasque (23, 41) pour une émission de lumière diffuse de la deuxième composante de lumière.

7. Dispositif selon la revendication 6,
**caractérisé en ce que**
le dispositif comprend plusieurs luminaires à vasques (23) qui sont disposés en un plafond lumineux modulaire (20).

8. Dispositif selon la revendication 2 ou 3,
**caractérisé en ce que**
celui-ci comprend un réflecteur secondaire (52) entourant le dispositif, qui est irradié par la ou les source(s) de lumière (LA2) pour l'émission de la deuxième composante de lumière.

9. Dispositif selon la revendication 8,
**caractérisé en ce que**
le réflecteur secondaire (52) est conçu de manière réfléchissante diffuse.

10. Dispositif selon l'une des revendications 2 à 9,
**caractérisé par**
au moins une applique murale (63) avec une source de lumière (LA2) pour l'émission de la deuxième composante de lumière, l'applique murale (63) étant conçue pour l'éclairage d'une partie de paroi verticale (101).

11. Dispositif selon l'une des revendications 2 à 10,
**caractérisé par**
au moins un projecteur (42) pour l'émission dirigée de la première composante de lumière.

12. Dispositif selon l'une des revendications 2 à 10,
**caractérisé par**
un dispositif à trame (5, 22, 32, 53) pour l'émission de la lumière émise par les sources de lumière (LA1) pour la production de la première composante de lumière dans une zone angulaire déterminée.

13. Dispositif selon la revendication 6 ou 7 et l'une des revendications 11 et 12,
**caractérisé en ce que**
le projecteur (42) ou le dispositif à trame (5, 22, 32, 32, 53) est intégré dans le luminaire à vasque (41) ou le plafond lumineux (33).

14. Dispositif selon la revendication 13,
**caractérisé en ce que**
le rapport entre la surface d'émission pour la deuxième composante de lumière et la surface d'émission pour la première composante de lumière est de 4:1 à 25:1.
